# EUROPÄISCHE PATENTSCHRIFT

(11) **EP 2 791 150 B1**
(45) Veröffentlichungstag und Bekanntmachung des Hinweises auf die Patenterteilung: **15.08.2018**
(21) Anmeldenummer: 12799075.2
(22) Anmeldetag: 08.12.2012
(51) Int. Cl.: C07F 9/30, C07F 9/38, C08K 5/5313, C08K 5/5317, C09K 21/12

(54) **MISCHUNGEN VON DIPHOSPHINSÄUREN UND ALKYLPHOSPHONSÄUREN, EIN VERFAHREN ZU DEREN HERSTELLUNG UND IHRE VERWENDUNG**
MIXTURES OF DIPHOSPHINIC ACIDS AND ALKYLPHOSPHONIC ACIDS, A PROCESS FOR THE PREPARATION THEREOF AND THE USE THEREOF
MÉLANGES D'ACIDES DIPHOSPHINIQUES ET D'ACIDES ALKYLPHOSPHONIQUES, PROCÉDÉ POUR LEUR PRÉPARATION ET LEUR UTILISATION

(30) Priorität: 16.12.2011 DE 102011121504
(43) Veröffentlichungstag der Anmeldung: 22.10.2014
(73) Patentinhaber: Clariant International Ltd, 4132 Muttenz (CH)
(72) Erfinder: SCHNEIDER, Fabian, 69214 Eppelheim (DE); OSTEROD, Frank, 50933 Köln (DE); BAUER, Harald, 50170 Kerpen (DE); SICKEN, Martin, 51149 Köln (DE)
(74) Vertreter: Mikulecky, Klaus
(86) Internationale Anmeldenummer: PCT/EP2012/005077
(87) Internationale Veröffentlichungsnummer: WO 2013/087178

(56) Entgegenhaltungen:
- EP-A1- 0 006 568
- WO-A2-2004/014993
- DATABASE CA [Online] CHEMICAL ABSTRACTS SERVICE, COLUMBUS, OHIO, US; 1979, DUERSCH, WALTER ET AL: "Phosphorus-containing polyadduct", XP002691747, gefunden im STN Database accession no. 1979:440862 & EP 0 000 024 A1 (HOECHST AG [DE]) 20. Dezember 1978 (1978-12-20)
- NIFANT'EV E E ET AL: "Reactions of acetylenes with hypophosphorous and phosphonous acids", JOURNAL OF GENERAL CHEMISTRY USSR, CONSULTANTS BUREAU, NEW YORK, NY, US, Bd. 56, Nr. 4, 20. September 1986 (1986-09-20), Seiten 680-688, XP002165520, ISSN: 0022-1279
- E E Nifant'ev: "D6", J. Gen. Chem. USSR, 1 January 1986 (1986-01-01), pages 680-688, XP055275551, Retrieved from the Internet: URL:www [retrieved on 2016-05-26]

## Beschreibung

Die Erfindung betrifft Mischungen von mindestens einer Diphosphinsäure und mindestens einer Alkylphosphonsäure, ein Verfahren zu deren Herstellung und ihre Verwendung.

EP 0 000 024 A1 offenbart Phosphor enthaltende Polyaddukte, Verfahren zu deren Herstellung sowie deren Verwendung zur flammhemmenden Ausrüstung von Textilmaterial. Beschrieben werden Gemische von oligomeren Phosphorverbindungen. Diese können unter anderem durch Umsetzung von 1,2-Alkylenoxiden oder 1,2-Alkylencarbonatem mit Phosphor enthaltenden Verbindungen erzeugt werden. Genannt werden unter anderem ein- oder mehrwertige Alkanphosphonsäuren mit 1 bis 18 C-Atomen oder ein- oder mehrwertige Dialkylphosphinsäuren.

Aus Journal of General Chemistry USSR, Consultant Bureau, New York, NY, US, Bd. 56, Nr. 4, 20. September 1986, S. 680-688 werden Mischungen von hypophosphoriger Säure mit Alkenylphosphonigsäure, Mischungen von Alkenylphosphonigsäure mit Alkylen-bis(phosphonigsäure sowie Mischungen von Alkenylalkylphosphinsäure mit Alkylen-bis(alkylphosphinsäure) offenbart.

WO 2004/014993 A2 beschreibt flammhemmend ausgerüstete Polyamidzusammensetzungen. Diese enthalten ein sternförmig verzweigtes Polyamid und ein Flammschutzmittel.

Aus EP 0 006 568 A1 sind Flammschutzmittel und ihre Verwendung zur Herstellung schwerentflammbarer Thermoplaste beschrieben. Bei den Flammschutzmitteln handelt es sich um Gemische aus Phosphinsäure oder Diphosphinsäure oder Phosphonsäure oder Diphosphonsäure oder einem Alkali-, Erdalkali- oder Erdmetallsalz oder einem anderen Derivat dieser Säuren und Melamin und/oder Dicyandiamid und/oder Guanidin.

Bei der Herstellung von Leiterplatten, die in zunehmenden Maß in verschiedenen Geräten, z. B. Computer, Kameras, Mobiltelefonen, LCD-, TFT-Bildschirmen und anderen Elektronikgeräten Verwendung finden, werden unterschiedliche Materialien, insbesondere Kunststoffe eingesetzt. Hierzu gehören vor allem Duroplaste, glasfaserverstärkte Duroplaste und Thermoplaste. Besonders oft werden wegen ihrer guten Eigenschaften Epoxidharze genutzt.

Gemäß den entsprechenden Normen (IPC-4101, Specification for Base Materials for Rigid ans Multilayer Printed Boards) müssen diese Leiterplatten flammwidrig bzw. flammfest ausgerüstet werden.

Die thermische Expansion von Leiterplatten stellt bei deren Herstellung ein Problem dar. Die Bedingungen der Elektronikfertigung von Leiterplatten verlangen, dass Leiterplatten hohe thermische Belastungen ohne Schädigungen oder Verformungen aushalten. Das Auftragen der Leiterbahnen (bleifreies Löten) auf Leiterplatten erfolgt bei Temperaturen bis ca. 260 °C.

Daher ist es von Bedeutung, dass sich Leiterplatten unter thermischem Stress nicht verziehen und die Produkte maßhaltig bleiben.

Die thermische Expansion ist vor allem auch bereits bei Prepregs (Kurzform für preimpregnated fibres, das sind vorimprägnierte Fasern) und Laminaten von Bedeutung, da diese die Rohformen bzw. Vorstufen von Leiterplatten darstellen. Es ist somit wichtig die thermische Expansion von Prüfkörpern zu minimieren, um ein gutes, maßhaltiges Produkt (fertige Leiterplatte) zu erhalten.

Es ist Aufgabe der vorliegenden Erfindung, Kunststoffe für Prepregs, Leiterplatten und Laminate so auszurüsten, dass diese - wenn überhaupt - nur einer sehr geringen thermischen Expansion unterliegen und die notwendige Maßhaltigkeit erfüllt wird.

Diese Aufgabe wird gelöst durch Mischungen von mindestens einer Diphosphinsäure der Formel (I) 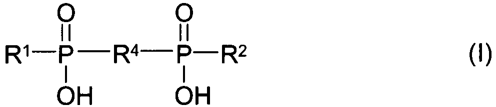 mit mindestens einer Alkylphosphonsäure der Formel (II) 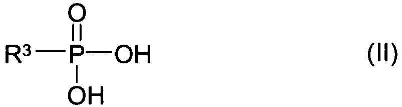 worin
R¹, R² und R³ gleich oder verschieden sind und Ethyl, n-Butyl, iso-Butyl, tert.-Butyl, n-Hexyl und/oder iso-Hexyl bedeuten, und
R⁴ Ethylen, Butylen oder Hexylen bedeutet.

Bevorzugt enthalten die Mischungen 0,1 bis 99,9 Gew.-% Diphosphinsäure der Formel (I) und 99,9 bis 0,1 Gew.-% Alkylphosphonsäure der Formel (II).

Besonders bevorzugt enthalten die Mischungen 40 bis 99,9 Gew.-% Diphosphinsäure der Formel (I) und 60 bis 0,1 Gew.-% Alkylphosphonsäure der Formel (II). Ebenfalls bevorzugt sind Mischungen die 60 bis 99,9 Gew.-% Diphosphinsäure der Formel (I) und 40 bis 0,1 Gew.-% Alkylphosphonsäure der Formel (II) enthalten.

Insbesondere enthalten die Mischungen 80 bis 99,9 Gew.-% Diphosphinsäure der Formel (I) und 20 bis 0,1 Gew.-% Alkylphosphonsäure der Formel (II).

In einer anderen Ausführungsform enthalten die Mischungen 90 bis 99,9 Gew.-% Diphosphinsäure der Formel (I) und 10 bis 0,1 Gew.-% Alkylphosphonsäure der Formel (II).

In einer weiteren Ausführungsform enthalten die Mischungen 95 bis 99,9 Gew.-% Diphosphinsäure der Formel (I) und 5 bis 0,1 Gew.-% Alkylphosphonsäure der Formel (II).

Für viele Anwendungen bevorzugt sind Mischungen, die 98 bis 99,9 Gew.-% Diphosphinsäure der Formel (I) und 2 bis 0,1 Gew.-% Alkylphosphonsäure der Formel (II) enthalten.

Besonders bevorzugt sind für die vorliegende Erfindung Mischungen, die 98 bis 99,9 Gew.-% Ethylen-1,2-bis(ethylphosphinsäure) und 2 bis 0,1 Gew.-% Ethyl-phosphonsäure enthalten.

Die Erfindung betrifft bevorzugt Mischungen der vorgenannten Art, in denen es sich bei der Diphosphinsäure um Ethylen-1,2-bis(ethylphosphinsäure),
Ethylen-1,2-bis(butylphosphinsäure),
Ethylen-1,2-bis(hexylphosphinsäure),
Butylen-1,2-bis(ethylphosphinsäure),
Butylen-1,2-bis(butylphosphinsäure),
Butylen-1,2-bis(hexylphosphinsäure), Hexylen-1,2-bis(ethylphosphinsäure), Hexylen-1,2-bis(butylphosphinsäure),
oder Hexylen-1,2-bis(hexylphosphinsäure)
und bei der Alkylphosphonsäure um Ethylphosphonsäure, Butylphosphonsäure, oder Hexylphosphonsäure handelt.

Bevorzugt enthalten die Mischungen weiterhin mindestens einen Synergisten.

Bevorzugt handelt es sich bei dem Synergisten um eine Stickstoff enthaltende Verbindung, wie Melem, Melam, Melon, Melaminborat, Melamincyanurat, Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat.

Bevorzugt handelt es sich bei dem Synergisten auch um Aluminiumverbindungen, Magnesiumverbindungen, Zinnverbindungen, Antimonverbindungen, Zinkverbindungen, Siliziumverbindungen, Phosphorverbindungen, Carbodiimide, Phosphazene, Piperazine, Piperazin(pyro)phosphate, (Poly-)isocyanate und/oder Styrol-Acryl-Polymere.

Insbesondere handelt es sich bei dem Synergisten um Aluminiumhydroxid, Halloysite, Saphire-Produkte, Böhmit, Nano-Böhmit; um Magnesiumhydroxid; um Antimonoxide; um Zinnoxide; um Zinkoxid, Zinkhydroxid, Zinkoxidhydrat, Zinkcarbonat, Zinkstannat, Zinkhydroxystannat, Zink-Silicat, Zinkphosphat, Zinkborphosphat, Zinkborat und/oder Zinkmolybdat; um Phosphinsäuren und ihre Salze, Phosphonsäuren und ihre Salze und/oder Phosphinoxide; um Carbinylbiscaprolactam.

Weiterhin handelt es sich bei dem Synergisten bevorzugt um stickstoffhaltige Verbindungen aus der Gruppe oligomere Ester des Tris(hydroxyethyl)isocyanurats mit aromatischen Polycarbinsäuren, oder Benzoguanamin, Acetoguanamin, Tris(hydroxyethyl)-isocyanurat, Allantoin, Glycouril, Cyanurate, Cyanurate-Epoxidverbindungen, Harnstoffcyanurat, Dicyanamid, Guanidin, Guanidinphosphat und/oder -sulfat.

Bevorzugt enthalten die Gemische 99 bis 1 Gew.-% der Mischung von mindestens einer Diphosphinsäure der Formel (I) und mindestens einer Alkylphosphonsäure der Formel (II) nach mindestens einem der Ansprüche 1 bis 11 und 1 bis 99 Gew.-% an Synergist.

Die Erfindung betrifft auch ein Verfahren zur Herstellung der Mischungen nach mindestens einem der Ansprüche 1 bis 10, dadurch gekennzeichnet, dass eine Phosphinsäurequelle mit einem Alkin in Anwesenheit eines Initiators umgesetzt wird.

Bevorzugt handelt es sich bei der Phosphinsäurequelle um Ethylphosphinsäure und bei dem Alkin um Acetylen, 1-Butin, 1-Hexin und/oder 2-Hexin.

Bevorzugt handelt es sich bei dem Initiator um einen Radikalinitiator mit einer Stickstoff-Stickstoff- oder einer Sauerstoff-Sauerstoff Bindung.

Besonders bevorzugt handelt es sich bei dem Radikalinitiator um 2,2'-Azobis(2-amidinopropan)-dihydrochlorid, 2,2'-Azobis(N,N'-dimethylenisobutyramidin)-dihydrochlorid, Azobis(isobutyronitril), 4,4'Azobis(4-cyano-pentansäure) und/oder 2,2'Azobis(2-methylbutyronitril oder um Wasserstoffperoxid, Ammoniumperoxodisulfat, Kaliumoperoxodisulfat, Dibenzoylperoxid, Di-tert.-butylperoxid , Peressigsäure, Diisobutyryl-peroxid, Cumol-peroxineodecanoat, tert.-Butyl-peroxineodecanoat, tert.-Butyl-peroxipivalat, tert.-Amyl-peroxipivalat, Dipropyl-peroxidicarbonat, Dibutyl-peroxidicarbonat, Dimyristyl-peroxidicarbonat, Dilauroyl-peroxid, 1,1,3,3-Tetramethylbutyl-peroxi-2-ethylhexanoat, tert.-Amyl-peroxi-2-ethylhexylcarbonat, tert.-Butyl-peroxiisobutyrat, 1,1-Di-(tert.-butylperoxi)-cyclohexan, tert.-Butyl-peroxibenzoat, tert.-Butyl-peroxiacetat, tert.-Butyl-peroxidiethylacetat, tert.-Butyl-peroxiisopropylcarbonat, 2,2-Di-(tert.-butylperoxi)-butan, tert.-Amyl-hydroperoxid und/oder 2,5-Dimethyl-2,5-di-(tert.-butylperoxi)-hexan.

Bevorzugt handelt es sich bei dem Lösungsmittel um gradkettige oder verzweigte Alkane, alkylsubstituierte aromatische Lösungsmittel, mit Wasser nicht oder nur teilweise mischbare Alkohole oder Ether, Wasser und/oder Essigsäure.

Bevorzugt handelt es sich bei dem Alkohol um Methanol, Propanol, i-Butanol und/oder n-Butanol oder Mischungen dieser Alkohole mit Wasser.

Bevorzugt beträgt die Reaktionstemperatur 50 bis 150 °C.

Die Erfindung betrifft auch die Verwendung von Mischungen von mindestens einer Diphosphinsäure der Formel (I) und mindestens einer Alkylphosphonsäure der Formel (II) nach mindestens einem der Ansprüche 1 bis 10 als Binder, als Vernetzer bzw. Beschleuniger beim Aushärten von Epoxidharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwend ungen.

Die Erfindung betrifft zudem die Verwendung von Mischungen von mindestens einer Diphosphinsäure der Formel (I) und mindestens einer Alkylphosphonsäure der Formel (II) nach mindestens einem der Ansprüche 1 bis 12 als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung sowie als Synergist.

Die Erfindung umfasst auch flammgeschützte thermoplastische oder duroplastische Polymerformmassen, -Formkörper, -Filme-, -Fäden und -Fasern, enthaltend 0,5 bis 99,5 Gew.-% Mischungen nach mindestens einem der Ansprüche 1 bis 12, 0,5 bis 99,5 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Die Erfindung betrifft schließlich flammgeschützte thermoplastische oder duroplastische Polymerformmassen, -Formkörper, -Filme, -Fäden und -Fasern, enthaltend 1 bis 30 Gew.-% Mischungen nach mindestens einem der Ansprüche 1 bis 12, 10 bis 95 Gew.-% thermoplastisches oder duroplastisches Polymer oder Mischungen derselben, 2 bis 30 Gew.-% Additive und 2 bis 30 Gew.-% Füllstoff bzw. Verstärkungsmaterialien, wobei die Summe der Komponenten 100 Gew.-% beträgt.

R¹ und R² sind gleich oder verschieden und bedeuten Ethyl, n-Butyl, iso-Butyl, tert.-Butyl, n-Hexyl und/oder iso-Hexyl; R³ bedeutet (unabhängig von R¹ und R²) Ethyl, n-Butyl, iso-Butyl, tert.-Butyl, n-Hexyl und/oder iso-Hexyl und R⁴ bedeutet Ethylen, Butylen oder Hexylen, damit ist die C₂-, C₄- oder C₆--Gruppe, die die beiden P-Atome verbindet, gemeint.

Bevorzugt sind auch Mischungen, bestehend aus 98 bis 99,9 Gew.-% Ethylen-1,2-bis(ethylphosphinsäure) und 2 bis 0,1 Gew.-% Ethylphosphinsäure.

Bevorzugte Zweier-Mischungen von mindestens einer Diphosphinsäure der Formel (I) und mindestens einer Alkylphosphonsäure der Formel (II) setzen sich zusammen aus
Ethylen-1,2-bis(ethylphosphinsäure) und Ethylphosphonsäure, Ethylen-1,2-bis(ethylphosphinsäure) und Butylphosphonsäure, Ethylen-1,2-bis(ethylphosphinsäure) und Hexylphosphonsäure, Ethylen-1,2-bis(butylphosphinsäure) und Ethylphosphonsäure, Ethylen-1,2-bis(butylphosphinsäure) und Butylphosphonsäure, Ethylen-1,2-bis(butylphosphinsäure) und Hexylphosphonsäure, Ethylen-1,2-bis(hexylphosphinsäure) und Ethylphosphonsäure, Ethylen-1,2-bis(hexylphosphinsäure) und Butylphosphonsäure, Ethylen-1,2-bis(hexylphosphinsäure) und Hexylphosphonsäure, Butylen-1,2-bis(ethylphosphinsäure) und Ethylphosphonsäure, Butylen-1,2-bis(ethylphosphinsäure) und Butylphosphonsäure, Butylen-1,2-bis(ethylphosphinsäure) und Hexylphosphonsäure, Butylen-1,2-bis(butylphosphinsäure) und Ethylphosphonsäure, Butylen-1,2-bis(butylphosphinsäure) und Butylphosphonsäure, Butylen-1,2-bis(butylphosphinsäure) und Hexylphosphonsäure, Butylen-1,2-bis(hexylphosphinsäure) und Ethylphosphonsäure, Butylen-1,2-bis(hexylphosphinsäure) und Butylphosphonsäure, Butylen-1,2-bis(hexylphosphinsäure) und Hexylphosphonsäure, Hexylen-1,2-bis(ethylphosphinsäure) und Ethylphosphonsäure, Hexylen-1,2-bis(ethylphosphinsäure) und Butylphosphonsäure, Hexylen-1,2-bis(ethylphosphinsäure) und Hexylphosphonsäure, Hexylen-1,2-bis(butylphosphinsäure) und Ethylphosphonsäure, Hexylen-1,2-bis(butylphosphinsäure) und Butylphosphonsäure, Hexylen-1,2-bis(butylphosphinsäure) und Hexylphosphonsäure, Hexylen-1,2-bis(hexylphosphinsäure) und Ethylphosphonsäure, Hexylen-1,2-bis(hexylphosphinsäure) und Butylphosphonsäure, Hexylen-1,2-bis(hexylphosphinsäure) und Hexylphosphonsäure.

Daneben können auch Mehrfach-Mischungen auftreten, z. B. aus Ethylen-1,2-bis(ethylphosphinsäure), Ethyl-phosphonsäure und Butyl-phosphonsäure oder etwa aus Ethylen-1,2-bis(ethylphosphinsäure), Ethylen-1,2-bis(butylphosphinsäure), Ethyl-phosphonsäure und Butyl-phosphonsäure usw.

Besonders bevorzugt sind R¹, R² und R³ gleich oder verschieden und bedeuten Ethyl oder Butyl.

Bevorzugt handelt es sich bei dem Synergist um einen ausdehnungsneutralen Stoff, d. h. dass er sich unter thermischer oder ähnlicher Belastung in seinen Ausmaßen nicht verändert. Solche Änderungen können mittels des thermischen Ausdehnungskoeffizienten bestimmt werden. Dieser beschreibt die Veränderungen der Abmessungen eines Stoffes bei Temperaturveränderungen.

Bevorzugt enthalten die Gemische 65 bis 1 Gew.-% der Mischung von mindestens einer Diphosphinsäure der Formel (I) und mindestens einer Alkylphosphonsäure der Formel (II) nach mindestens einem der Ansprüche 1 bis 11 und 1 bis 35 Gew.-% an Synergist. Bevorzugt enthalten die Gemische auch 80 bis 95 Gew.-% der Mischung von mindestens einer Diphosphinsäure der Formel (I) und mindestens einer Alkylphosphonsäure der Formel (II) nach mindestens einem der Ansprüche 1 bis 11 und 5 bis 20 Gew.-% an Synergist.

Beim erfindungsgemäßen Verfahren wird eine Phosphinsäurequelle mit einem Alkin in Anwesenheit eines Initiators umgesetzt. Dabei wird typischerweise zunächst ein Alken mit Phosphinsäure zu einer Alkylphosphinsäure umgesetzt, welche dann danach mit einem Alkin weiter zur erfindungsgemäßen Mischung reagiert wird.

Bevorzugt wird hierbei Phosphinsäure selbst mit Ethylen in Gegenwart eines (Metallocen-)Katalysators zur Ethylphosphinsäure umgesetzt und diese nach erfolgter Reinigung mit Acetylen in Gegenwart eines Initators zur erfindungsgemäßen Mischung einer Diphosphinsäure der Formel (I) mit mindestens einer Alkylphosphonsäure der Formel (II) umgesetzt.

Bevorzugt ist die Verarbeitung der erfindungsgemäßen Mischung von mindestens einer Diphosphinsäure der Formel (I) und mindestens einer Alkylphosphonsäure der Formel (II) durch Einmischen in ein Polymersystem.

Das Einmischen erfolgt üblicherweise durch Kneten, Dispergieren und/oder Extrudieren.

Bevorzugt erfolgt die Verwendung der erfindungsgemäßen Mischung von mindestens einer Diphosphinsäure der Formel (I) und mindestens einer Alkylphosphonsäure der Formel (II) durch additive Einarbeitung in ein Polymersystem.

Besonders bevorzugt erfolgt die Verwendung der erfindungsgemäßen Mischung von mindestens einer Diphosphinsäure der Formel (I) und mindestens einer Alkylphosphonsäure der Formel (II) durch Einreaktion in ein Polymersystem. Die Einreaktion ist durch eine resultierende, permanente Bindung zu den Polymersträngen des Polymersystems gekennzeichnet, wodurch die erfindungsgemäße Mischung von mindestens einer Diphosphinsäure der Formel (I) und mindestens einer Alkylphosphonsäure der Formel (II) nicht herausgelöst werden kann.

Die erfindungsgemäßen Mischungen können zusammen mit weiteren Flammschutzmitteln und weiteren Synergisten eingesetzt werden. Zu den weiteren Flammschutzmitteln gehören beispielsweise Phosphorverbindungen wie Phosphinate, Phosphonate, Phosphate, Phosphonsäuren, Phosphinsäuren, Phosphorsäuren, Phosphane, Phosphanoxide, Phosphoroxide und andere.

Geeignete Polymer-Additive für flammgeschützte Polymerformmassen und Polymerformkörper sind UV-Absorber, Lichtschutzmittel, Gleitmittel, Farbmittel, Antistatika, Nukleierungsmittel, Füllstoffe, Synergisten, Verstärkungsmittel und andere.

Bevorzugt stammen die Polymersysteme aus der Gruppe der thermoplastischen Polymere wie Polyamid, Polyester oder Polystyrol und/oder duroplastischen Polymere.

Bevorzugt handelt es sich bei den duroplastischen Polymeren um Epoxidharze.

Bevorzugt handelt es sich bei den duroplastischen Polymeren um Epoxidharze, die mit Phenolen und/oder Dicyandiamid [allgemeiner: Phenolderivaten (Resole); Alkohole und Amine, insbesondere Phenolderivate und Dicyandiamid gehärtet sind.

Besonders bevorzugt handelt es sich bei den duroplastischen Polymeren um Epoxidharze, die mit Phenolen und/oder Dicyandiamid und oder einem Katalysator gehärtet sind.

Bevorzugt handelt es sich bei den Katalysatoren um Imidazolverbindungen.

Bevorzugt handelt es sich bei den Epoxidharzen um Polyepoxidverbindungen.

Bevorzugt handelt es sich bei den Epoxidharzen um Harze auf der Basis Novolak und/oder Bisphenol-A. Bevorzugt handelt es sich bei den Polymeren um Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol® 143E (BASF), Poly-(p-methylstyrol), Poly-(alpha-methylstyrol). Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Styrol-Polymeren um eher grobporigen Schaum wie EPS (expandiertes Polystyrol), z. B. Styropor (BASF) und/oder feinporigeren wie XPS (Extrudierter Polystyrol-Hartschaum), z. B. Styrodur® (BASF). Bevorzugt sind Polystyrolschaumstoffe wie z. B. Austrotherm® XPS, Styrofoam® (Dow Chemical), Floormate®, Jackodur®, Lustron®, Roofmate®, Sagex® und Telgopor®.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon® 4, Fa. DuPont), Polyamid 4/6 (Poly(tetramethylen-adipamid), Poly-(tetramethylen-adipinsäurediamid), Nylon® 4/6, Fa. DuPont), Polyamid 6 (Polycaprolactam, Poly-6-aminohexansäure, Nylon® 6, Fa. DuPont, Akulon K122, Fa. DSM; Zytel® 7301, Fa. DuPont; Durethan® B 29, Fa. Bayer), Polyamid 6/6 ((Poly(N,N'-hexamethyleneadipinediamid), Nylon® 6/6 , Fa. DuPont, Zytel® 101, Fa. DuPont; Durethan A30, Durethan® AKV, Durethan® AM, Fa. Bayer; Ultramid® A3, Fa BASF), Polyamid 6/9 (Poly(hexamethylen nonanediamid), Nylon® 6/9 , Fa. DuPont), Polyamid 6/10 (Poly(hexamethylen sebacamid), Nylon® 6/10 , Fa. DuPont), Polyamid 6/12 (Poly(hexamethylendodecanediamid), Nylon® 6/12 , Fa. DuPont), Polyamid 6/66 (Poly(hexamethylenadipamid-co-caprolactam), Nylon® 6/66, Fa. DuPont), Polyamid 7 (Poly-7-aminoheptansäure, Nylon® 7, Fa. DuPont), Polyamid 7,7 (Polyheptamethylenpimelamid, Nylon® 7,7, Fa. DuPont), Polyamid 8 (Poly-8-aminooctansäure, Nylon® 8, Fa. DuPont), Polyamid 8,8 (Polyoctamethylensuberamid, Nylon® 8,8, Fa. DuPont), Polyamid 9 (Poly-9-aminononansäure, Nylon® 9, Fa. DuPont), Polyamid 9,9 (Polynonamethylenazelamid, Nylon® 9,9, Fa. DuPont), Polyamid 10 (Poly-10-amino-decansäure, Nylon® 10, Fa. DuPont), Polyamid 10,9 (Poly(decamethylenazelamid), Nylon® 10,9, Fa. DuPont), Polyamid 10,10 (Polydecamethylensebacamid, Nylon® 10,10, Fa. DuPont), Polyamid 11 (Poly-11-aminoundecansäure, Nylon® 11, Fa. DuPont), Polyamid 12 (Polylauryllactam, Nylon® 12 , Fa. DuPont, Grillamid® L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid, Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM (Ethylen-Propylen-Dien-Kautschuk) oder ABS (Acrylnitril-Butadien-Styrol) modifizierte Polyamide oder Copolyamide; sowie während der Verarbeitung kondensierte Polyamide ("RIM-Polyamidsysteme"). Bevorzugt handelt es sich bei den Polymeren um Polyharnstoffe, Polybenzimidazole, Polyimide, Polyamidimide, Polyetherimide, Polyesterimide und Polyhydantoine. Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex® 2500, Celanex® 2002, Fa Celanese; Ultradur®, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.

Bevorzugt handelt es sich bei den Polymeren um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethan-acrylaten oder Polyester-acrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z.B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylen-terephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat / thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid /Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/ oder PBT/PET/PC (Polybutylenterephthalat / Polyethylenterephthalat / Polycarbonat).

Die Polymere können lasermarkierbar sein.

Bevorzugt weist die hergestellte Formmasse eine rechteckige Form mit regelmäßiger oder unregelmäßiger Grundfläche, Würfelform, Quaderform, Kissenform, Prismenform auf.

Die Erfindung wird durch die nachstehenden Beispiele erläutert. Herstellung, Verarbeitung und Prüfung von flammgeschützten Polymerformmassen und flammgeschützten Polymerformkörpern.

Die Flammschutzkomponenten werden mit dem Polymergranulat und evtl. Additiven vermischt und auf einem Doppelschnecken-Extruder (Typ Leistritz LSM® 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0: Kein Nachbrennen länger als 10 sec., Summe der Nachbrennzeiten bei 10 Beflammungen nicht größer als 50 sec., kein brennendes Abtropfen, kein vollständiges Abbrennen der Probe, kein Nachglühen der Proben länger als 30 sec. nach Beflammungsende.
V-1: Kein Nachbrennen länger als 30 sec. nach Beflammungsende, Summe der Nachbrennzeiten bei 10 Beflammungen nicht größer als 250 sec., kein Nachglühen der Proben länger als 60 sec. nach Beflammungsende, übrige Kriterien wie bei V-0.
V-2: Zündung der Watte durch brennendes Abtropfen, übrige Kriterien wie bei V-1. Nicht klassifizierbar (nkl): Erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumen-Prozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24-28 | bedingt brennbar |
| LOI | 29-35 | flammwidrig |
| LOI | >36 | besonders flammwidrig |

Eingesetzte Chemikalien und Abkürzungen:

| | |
|---|---|
| Phenolnovolak: | Bakelite® PF 0790, Fa. Hexion |
| Initiator: | Vazo® 67, Fa. DuPont |

Grundsätzlich wird das erfindungsgemäße Verfahren so ausgeführt, dass die Reaktionsmischung unter den gegebenen Reaktionsbedingungen nur einem relativ geringen Acetylenstrom von maximal 1 l/h ausgesetzt wird. Nachdem das Acetylen bis zur genügenden Umsetzung durch die Reaktionslösung geleitet wurde und eine ausreichende Nachreaktionszeit erfolgte, wird die Acetylenzufuhr abgestellt und die Aufarbeitung unter Sauerstoff oder Luft durchgeführt. Dazu wird das Reaktionsgemisch beispielsweise mit Sauerstoff belüftet und Acetylen mit Sauerstoff aus der Apparatur getrieben und die Produktmischung aufgearbeitet.

Soweit nicht anders angegeben, handelt es sich bei allen Mengen um Gew.-%.

### Beispiel 1

Bei Raumtemperatur werden in einem Dreihalskolben mit Rührer und Intensivkühler 5852 g Tetrahydrofuran vorgelegt und unter Rühren und Durchleiten von Stickstoff "entgast" und alle weiteren Reaktionen unter Stickstoff ausgeführt. Dann werden 70 mg Tris(dibenzyliden-aceton)dipalladium und 95 mg 4,5-Bis(diphenylphosphino)-9,9-dimethylxanthen hinzugegeben und weitere 15 Minuten gerührt. Unter Rühren erfolgt die Zugabe von 198 g Phosphinsäure in 198 g Wasser. Die Reaktionslösung wird in einen 2 l-Büchi-Reaktor überführt. Unter Rühren des Reaktionsgemisches wird der Reaktor mit 2,5 bar Ethylen beschickt und das Reaktionsgemisch auf 80 °C geheizt. Nach einer Ethylenaufnahme von 56 g wird auf Raumtemperatur abgekühlt und freies Ethylen unter Verbrennung abgelassen.

Das Reaktionsgemisch wird am Rotationsverdampfer bei maximal 60 °C und 350 - 10 mbar vom Lösungsmittel befreit. Der Rückstand wird mit 300 g vollentsalztem (VE-)Wasser versetzt und 1 Stunde bei Raumtemperatur unter Stickstoffatmosphäre gerührt. Der entstandene Rückstand wird filtriert und das Filtrat mit 200 ml Toluol extrahiert. Die wässrige Phase wird am Rotationsverdampfer bei maximal 60 °C und 250 - 10 mbar vom Lösungsmittel befreit.
31P-NMR(D₂O, gekoppelt): Dublet von Multiplet, 36.7 ppm

### Beispiel 2

0,5 mol Ethylphosphinsäure aus Beispiel 1 werden in Butanol vorgelegt und unter Rühren inertisiert und auf 80 °C erwärmt. Es wird Acetylen durch die Reaktionslösung geleitet und 0,4 mol-% Initiator über 3 Stunden zu dosiert und nachreagieren gelassen. Die Acetylenzufuhr wird abgestellt und Acetylen mit Stickstoff aus der Apparatur ausgetrieben. Nach Abkühlen des Reaktionsgemisches wird der gebildete Feststoff abgesaugt und mit Aceton redispergiert, gewaschen und 4 Stunden im Vakuumtrockenschrank bei 100 °C getrocknet.

Es wird in einer Ausbeute von 62 % 33,2 g eines Gemisches aus Ethylen-1,2-bis(ethylphosphinsäure) (99,9 %) und Ethylphosphonsäure (0,1 %) erhalten.

### Beispiel 3

0,5 mol Ethylphosphinsäure aus Beispiel 1 werden in Butanol vorgelegt und unter Rühren inertisiert und auf 80 °C erwärmt. Es wird Acetylen durch die Reaktionslösung geleitet und 0,4 mol-% Initiator über 2,5 Stunden zu dosiert und nachreagieren gelassen. Die Acetylenzufuhr wird abgestellt und Acetylen mit Stickstoff aus der Apparatur ausgetrieben. Nach Abkühlen des Reaktionsgemisches wird der gebildete Feststoff abgesaugt und mit Aceton redispergiert, gewaschen und 4 Stunden im Vakuumtrockenschrank bei 100 °C getrocknet.

Es wird in einer Ausbeute von 68 % 36,3 g eines Gemisches aus Ethylen-1,2-bis(ethylphosphinsäure) (98 %) und Ethylphosphonsäure (2 %) erhalten.

### Beispiel 4

0,5 mol Ethylphosphinsäure aus Beispiel 1 werden in Butanol vorgelegt und unter Rühren inertisiert und auf 90 °C erwärmt. Es wird Acetylen durch die Reaktionslösung geleitet und 0,5 mol-% Initiator über 2 Stunden zudosiert und nachreagieren gelassen. Die Acetylenzufuhr wird abgestellt und Acetylen mit Stickstoff aus der Apparatur ausgetrieben. Nach Abkühlen des Reaktionsgemisches wird der gebildete Feststoff abgesaugt und mit Aceton redispergiert, gewaschen und 4 Stunden im Vakuumtrockenschrank bei 100 °C getrocknet.

Es wird in einer Ausbeute von 63 %, 33,8 g eines Gemisches aus Ethylen-1,2-bis(ethylphosphinsäure) (90 %) und Ethylphosphonsäure (10 %) erhalten.

### Beispiel 5

0,5 mol Ethylphosphinsäure aus Beispiel 1 werden in Butanol vorgelegt und unter Rühren inertisiert und auf 100 °C erwärmt. Es wird Acetylen durch die Reaktionslösung geleitet und 0,8 mol-% Initiator über 2 Stunden zudosiert und nachreagieren gelassen. Die Acetylenzufuhr wird abgestellt und Acetylen mit Stickstoff aus der Apparatur ausgetrieben. Nach Abkühlen des Reaktionsgemisches wird der gebildete Feststoff abgesaugt und mit Aceton redispergiert, gewaschen und 4 Stunden im Vakuumtrockenschrank bei 100 °C getrocknet.

Es wird in einer Ausbeute von 75 %, 40,6 g eines Gemisches aus Ethylen-1,2-bis(ethylphosphinsäure) (60 %) und Ethylphosphonsäure (40 %) erhalten.

### Beispiel 6

0,5 mol Ethylphosphinsäure aus Beispiel 1 werden in Butanol vorgelegt und unter Rühren inertisiert und auf 100 °C erwärmt. Es wird Acetylen durch die Reaktionslösung geleitet und 1,0 mol-% Initiator über 2 Stunden zudosiert und nachreagieren lassen. Die Acetylenzufuhr wird abgestellt und Acetylen mit Stickstoff aus der Apparatur ausgetrieben. Nach Abkühlen des Reaktionsgemisches wird der gebildete Feststoff abgesaugt und mit Aceton redispergiert, gewaschen und 4 Stunden im Vakuumtrockenschrank bei 100 °C getrocknet.

Es wird in einer Ausbeute von 71 %, 38,5 g eines Gemisches aus Ethylen-1,2-bis(ethylphosphinsäure) (50 %) und Ethylphosphonsäure (50 %) erhalten.

### Allgemeine Vorschrift zur Herstellung von Polymerformkörpern:

### a) Herstellung von phosphormodifiziertem Epoxidharz

In einer 2 I-Fünfhalskolbenapparatur werden 1000 g des Epoxidharzes (z. B. Beckopox EP 140) vorgelegt. Es wird über eine Stunde auf 110 °C geheizt und im Vakuum flüchtige Komponenten entfernt.

Danach wird das Reaktionsgemisch mit Stickstoff inertisiert und die Temperatur im Kolben auf 170 °C erhöht. Jeweils 118 g des Gemisches der Phosphorverbindungen (ausgewählt aus den Beispielen 2 bis 6) werden unter Rühren und Stickstoffdurchfluss zugegeben wobei eine exotherme Reaktion beobachtet wird. Das erhaltene Harz ist gelb verfärbt und fließfähig.

### b) Herstellung von Epoxidharz Probekörpern

100 Teile des phosphormodifizierten Epoxidharzes werden mit einem entsprechenden OH Äquivalent Phenolnovolak (Hydroxidäquivalente 105 g/mol, Schmelzpunkt 85 - 95 °C) gemischt und auf 150 °C aufgeheizt. Hierbei verflüssigen sich die Komponenten. Man rührt langsam bis eine homogene Mischung entsteht und lässt auf 130 °C abkühlen. Nun gibt man 0,03 Teile 2-Phenylimidazol zu und rührt nochmals 5 - 10 min. Im Anschluss wird der Ansatz warm in eine Schale gegossen und für 2 h bei 140 °C und 2 h bei 200 °C ausgehärtet.

### c) Herstellung Epoxidharz Laminat

In 63 Teilen Aceton und 27 Teilen Dowanol® PM werden 100 Teile phosphormodifiziertes Epoxidharz nach b) gegeben und mit der entsprechenden Menge Phenolharz versetzt. Man lässt den Ansatz 30 Min. rühren und gibt nun 2-Phenylimidazol zu. Danach wird der Ansatz über ein 400 µm Sieb filtriert um überschüssige Harzpartikel zu entfernen. Nun wird ein Glasgewebe (Typ 7628, 203 g/m²) in die Lösung eingetaucht, bis eine vollständige Benetzung des Gewebes stattgefunden hat. Das benetzte Gewebe wird aus der Mischung gezogen und überschüssiges Harz entfernt. Im Anschluss wird das benetze Gewebe stufenweise im Trockenschrank für kurze Zeit bei Temperaturen bis auf 165 °C vorgehärtet und danach in einer Heizpresse ausgehärtet. Der Harzanteil der ausgehärteten Laminate beträgt 30 - 50 %. Von dem hergestellten Formkörper, einem Laminat, wird die thermische Ausdehnung nach ASTM E831-06 bestimmt.

### Beispiel 7

Nach der Vorschrift zur Herstellung eines Polymerformkörpers wird mit 100 % eines Bisphenol-A Harzes ein Laminat hergestellt. Dieses weist die in der Tabelle angegebenen Werte für den thermischen Ausdehnungskoeffizient auf.

### Beispiel 8

Reine Ethylen-1,2-bis(ethylphosphinsäure) wird erhalten, in dem das Produktgemisch aus Beispiel 2 mehrfach mit Aceton gewaschen wird, bis keine Ethylphosphonsäure mehr nachweisbar ist.

Nach der allgemeinen Vorschrift zur Herstellung eines Polymerformkörpers wird dann mit einer Zusammensetzung aus 90 % Bisphenol-A Harz mit Härter und Katalysator und 10 % der Ethylen-1,2-bis(ethylphosphinsäure) ein Formkörper hergestellt.

### Beispiel 9

Nach EP-A-2178891 wird aus Phosphinsäure mittels Katalystor und Ethylen Ethylphosphinsäure erhalten, die mittels Veresterung und Destillation gereinigt wird. Durch anschließende Oxidation mit Sauerstoff wird reine Ethylphosphonsäure erhalten.

Nach der allgemeinen Vorschrift zur Herstellung eines Polymerformkörpers wird dann mit einer Zusammensetzung aus 90 % Bisphenol-A Harz mit Härter und Katalysator und 10 % der erhaltenen Ethylphosphonsäure ein Formkörper hergestellt.

### Beispiel 10

Nach der allgemeinen Vorschrift zur Herstellung eines Polymerformkörpers wird mit einer Zusammensetzung aus 90 % Bisphenol-A Harz mit Härter und Katalysator und 10 % des erfindungsgemäßen Gemisches aus Ethylen-1,2-bis(ethylphosphinsäure) und Ethylphosphonsäure aus Beispiel 2 ein Formkörper hergestellt.

### Beispiel 11

Nach der allgemeinen Vorschrift zur Herstellung eines Polymerformkörpers wird mit einer Zusammensetzung aus 90 % Bisphenol-A Harz mit Härter und Katalysator und 10 % des erfindungsgemäßen Gemisches aus Ethylen-1,2-bis(ethylphosphinsäure) und Ethylphosphonsäure aus Beispiel 3 ein Formkörper hergestellt.

### Beispiel 12

Nach der allgemeinen Vorschrift zur Herstellung eines Polymerformkörpers wird mit einer Zusammensetzung aus 90 % Bisphenol-A Harz mit Härter und Katalysator und 10 % des erfindungsgemäßen Gemisches aus Ethylen-1,2-bis(ethylphosphinsäure) und Ethylphosphonsäure nach Beispiel 4 ein Formkörper hergestellt.

### Beispiel 13

Nach der allgemeinen Vorschrift zur Herstellung eines Polymerformkörpers wird mit einer Zusammensetzung aus 90 % Bisphenol-A Harz mit Härter und Katalysator und 10 % des erfindungsgemäßen Gemisches aus Ethylen-1,2-bis(ethylphosphinsäure) und Ethylphosphonsäure aus Beispiel 5 ein Formkörper hergestellt.

### Beispiel 14

Nach der allgemeinen Vorschrift zur Herstellung eines Polymerformkörpers wird mit einer Zusammensetzung aus 90 % Bisphenol-A Harz mit Härter und Katalysator und 10 % des erfindungsgemäßen Gemisches aus Ethylen-1,2-bis(ethylphosphinsäure) und Ethylphosphonsäure aus Beispiel 6 ein Formkörper hergestellt.

Die Ergebnisse sind in der nachfolgenden Tabelle wiedergegeben

| Beispiel | Zusammensetzung Polymersystem / Stoffgemisch | Stoffgemisch Ethylen-1,2-bis (Ethylphosphinsäure) / Ethylphosphonsäure | Thermischer Ausdehnungskoefffizient 0° - 100° [ppm/°C] | | |
|---|---|---|---|---|---|
| | | | Z | X | Y |
| 7 (Vergl.) | 100 : 0 | | 69 | 20 | 7 |
| 8 | 90 : 10 | 100 : 0 | 68 | 20 | 7 |
| 9 | 90 : 10 | 0 : 100 | 70 | 22 | 7 |
| 10 | 90 : 10 | 99,9 : 0,1 (aus Beispiel 2) | 64 | 18 | 5 |
| 11 | 90 : 10 | 98 : 2 (aus Beispiel 3) | 60 | 16 | 5 |
| 12 | 90 : 10 | 90 : 10 (aus Beispiel 4) | 58 | 16 | 5 |

Die Gemische aus Beispiel 5 und 6 ergeben ebenfalls eine Verkleinerung des thermischen Ausdehnungskoeffizienten.

Im Vergleich zum reinen Laminat (Beispiel 7) nehmen die Werte für den thermischen Ausdehnungskoeffizienten des Laminats mit dem erfindungsgemäßen Stoffgemisch aus Ethylen-1,2-bis(ethylphosphinsäure) und Ethylphosphonsäure ab, die thermische Ausdehnung ist somit sehr gering. Eine Erhöhung des Ethylphosphonsäureanteils bewirkt eine weitere Verbesserung. Die erfindungsgemäßen Produkte führen zu einer geringeren Ausdehnung der hergestellten Formkörper und genügen somit den Anforderungen an die Maßhaltigkeit.

### Beispiel 15

### Herstellung von Polymerformkörpern auf Polyesterbasis:

### a) Herstellung von Phosphor-modifiziertem Polyethylenterephthalat

1000 g Dimethylterephthalat werden mit 720 ml Ethylenglykol und 230 mg Mn(OCOCH₃)₄ * 4 H₂O bei Temperaturen von 170 - 220 °C unter einer Stickstoffatmosphäre umgeestert. Nach der Abscheidung des Methanols werden 17,2 g des erfindungsgemäßen Gemisches aus Beispiel 4 bei 220 °C dazugegeben und nach Zugabe von 350 mg Sb₂O₃ das Reaktionsgefäß weiter auf 250 °C erwärmt und gleichzeitig ein Vakuum angelegt. Die Polymerisation erfolgt bei 0,2 mm Hg und 287 °C binnen 2 Stunden. Das erhaltene Produkt hat einen Schmelzpunkt von 240 - 244 °C, einen Phosphorgehalt von 0,5 % und liegt als Granulat vor.

### b) Herstellung von Kunststoff-Formkörpern

Das so hergestellte Polymergranulat wird mit evtl. Additiven vermischt und auf einem Doppelschnecken-Extruder (Typ Leistritz LSM 30/34) bei Temperaturen von 250 bis 290 °C (PET-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 250 bis 300 °C (PET-GV) zu Prüfkörpern verarbeitet.

Die Brandklasse UL 94 und der LOI wurde an Prüfkörpern der Dicke 1,6 mm bestimmt.

Formkörper der Dicke 1,6 mm ergeben einen V-0 und einen LOI von 28 %.

## Patentansprüche

1. Mischungen von mindestens einer Diphosphinsäure der Formel (I) 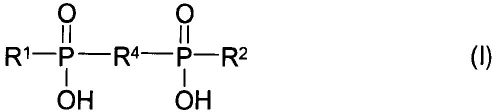 mit mindestens einer Alkylphosphonsäure der Formel (II) 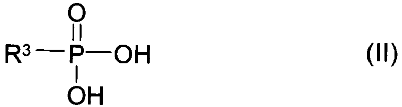 worin
R¹, R² und R³ gleich oder verschieden sind und Ethyl, n-Butyl, iso-Butyl, tert.-Butyl, n-Hexyl und/oder iso-Hexyl bedeuten und
R⁴ Ethylen, Butylen oder Hexylen bedeutet.

2. Mischungen nach Anspruch 1, **dadurch gekennzeichnet, dass** sie 0,1 bis 99,9 Gew.-% Diphosphinsäure der Formel (I) und 99,9 bis 0,1 Gew.-% Alkylphosphonsäure der Formel (II) enthalten.

3. Mischungen nach einem oder mehreren der Ansprüche 1 bis 2, **dadurch gekennzeichnet, dass** sie 40 bis 99,9 Gew.-% Diphosphinsäure der Formel (I) und 60 bis 0,1 Gew.-% Alkylphosphonsäure der Formel (II) enthalten.

4. Mischungen nach einem oder mehreren der Ansprüche 1 bis 3, **dadurch gekennzeichnet, dass** sie 60 bis 99,9 Gew.-% Diphosphinsäure der Formel (I) und 40 bis 0,1 Gew.-% Alkylphosphonsäure der Formel (II) enthalten.

5. Mischungen nach einem oder mehreren der Ansprüche 1 bis 4, **dadurch gekennzeichnet, dass** sie 80 bis 99,9 Gew.-% Diphosphinsäure der Formel (I) und 20 bis 0,1 Gew.-% Alkylphosphonsäure der Formel (II) enthalten.

6. Mischungen nach einem oder mehreren der Ansprüche 1 bis 5, **dadurch gekennzeichnet, dass** sie 90 bis 99,9 Gew.-% Diphosphinsäure der Formel (I) und 10 bis 0,1 Gew.-% Alkylphosphonsäure der Formel (II) enthalten.

7. Mischungen nach einem oder mehreren der Ansprüche 1 bis 6, **dadurch gekennzeichnet, dass** sie 95 bis 99,9 Gew.-% Diphosphinsäure der Formel (I) und 5 bis 0,1 Gew.-% Alkylphosphonsäure der Formel (II) enthalten.

8. Mischungen nach einem oder mehreren der Ansprüche 1 bis 7, **dadurch gekennzeichnet, dass** sie 98 bis 99,9 Gew.-% Diphosphinsäure der Formel (I) und 2 bis 0,1 Gew.-% Alkylphosphonsäure der Formel (II) enthalten.

9. Mischungen nach einem oder mehreren der Ansprüche 1 bis 8, **dadurch gekennzeichnet, dass** es sich bei der Diphosphinsäure um Ethylen-1,2-bis(ethylphosphinsäure), Ethylen-1,2-bis(butylphosphinsäure), Ethylen-1,2-bis(hexylphosphinsäure), Butylen-1,2-bis(ethylphosphinsäure), Butylen-1,2-bis(butylphosphinsäure), Butylen-1,2-bis(hexylphosphinsäure), Hexylen-1,2-bis(ethylphosphinsäure), Hexylen-1,2-bis(butylphosphinsäure) oder Hexylen-1,2-bis(hexylphosphinsäure) und bei der Alkylphosphonsäure um Ethylphosphonsäure, Butylphosphonsäure oder Hexylphosphonsäure handelt.

10. Mischungen nach einem oder mehreren der Ansprüche 1 bis 9, **dadurch gekennzeichnet, dass** sie 98 bis 99,9 Gew.-% Ethylen-1,2-bis(ethylphosphinsäure) und 2 bis 0,1 Gew.-% Ethylphosphonsäure enthalten.

11. Mischungen nach einem oder mehreren der Ansprüche 1 bis 10, **dadurch gekennzeichnet, dass** sie weiterhin mindestens einen Synergisten enthalten, wobei es sich um eine Stickstoff enthaltende Verbindung wie Melem, Melam, Melon, Melaminborat, Melamincyanurat, Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat;
um Aluminiumverbindungen wie Aluminiumhydroxid, Halloysite, Saphire-Produkte, Böhmit, Nano-Böhmit;
um Magnesiumverbindungen wie Magnesiumhydroxid;
um Zinnverbindungen wie Zinnoxide;
um Antimonverbindungen wie Antimonoxide;
um Zinkverbindungen wie Zinkoxid, Zinkhydroxid, Zinkoxidhydrat, Zinkcarbonat, Zinkstannat, Zinkhydroxystannat, Zink-Silicat, Zinkphosphat, Zinkborphosphat, Zinkborat und/oder Zinkmolybdat;
um Siliziumverbindungen, wie Silikate und/oder Silikone;
um Phosphorverbindungen wie Phosphinsäuren und ihre Salze, Phosphonsäuren und ihre Salze und/oder Phosphinoxide, Phosphazene und/oder Piperazin(pyro)phosphate;
um Carbodiimide, Piperazine, (Poly-)isocyanate, Styrol-Acryl-Polymere; und/oder Carbinylbiscaprolactam;
um stickstoffhaltige Verbindungen aus der Gruppe oligomere Ester des Tris(hydroxyethyl)isocyanurats mit aromatischen Polycarbinsäuren, oder Benzoguanamin, Acetoguanamin, Tris(hydroxyethyl)-isocyanurat, Allantoin, Glycouril, Cyanurate, Cyanurate-Epoxidverbindungen, Harnstoffcyanurat, Dicyanamid, Guanidin, Guanidinphosphat und/oder -sulfat handelt.

12. Mischungen nach einem oder mehreren der Ansprüche 1 bis 11, **dadurch gekennzeichnet, dass** sie 99 bis 1 Gew.-% einer Mischung von mindestens einer Diphosphinsäure der Formel (I) und mindestens einer Alkylphosphonsäure der Formel (II) nach mindestens einem der Ansprüche 1 bis 11 und 1 bis 99 Gew.-% an Synergist enthalten.

13. Verfahren zur Herstellung der Mischungen nach mindestens einem der Ansprüche 1 bis 10, **dadurch gekennzeichnet, dass** eine Phosphinsäurequelle mit einem Alkin in einem Lösungsmittel in Anwesenheit eines Initiators umgesetzt wird.

14. Verfahren nach Anspruch 13, **dadurch gekennzeichnet, dass** es sich bei der Phosphinsäurequelle um Ethylphosphinsäure und es sich bei dem Alkin um Acetylen, 1-Butin, 1-Hexin und/oder 2-Hexin handelt.

15. Verfahren nach Anspruch 13 oder 14, **dadurch gekennzeichnet, dass** es sich bei dem Initiator um einen Radikalinitiator mit einer Stickstoff-Stickstoff- oder einer Sauerstoff-Sauerstoff Bindung handelt.

16. Verfahren nach Anspruch 15, **dadurch gekennzeichnet, dass** es sich bei dem Radikalinitiator um 2,2'-Azobis(2-amidinopropan)-dihydrochlorid, 2,2'-Azobis(N,N'-dimethylenisobutyramidin)dihydrochlorid, Azobis(isobutyronitril), 4,4'Azobis(4-cyano-pentansäure) und/oder 2,2'Azobis(2-methylbutyronitril oder um Wasserstoffperoxid, Ammoniumperoxodisulfat, Kaliumoperoxodisulfat, Dibenzoylperoxid, Di-tert.-butylperoxid , Peressigsäure, Diisobutyryl-peroxid, Cumol-peroxineodecanoat, tert.-Butyl-peroxineodecanoat, tert.-Butyl-peroxipivalat, tert.-Amyl-peroxipivalat, Dipropyl-peroxidicarbonat, Dibutyl-peroxidicarbonat, Dimyristyl-peroxidicarbonat, Dilauroyl-peroxid, 1,1,3,3-Tetramethylbutyl-peroxi-2-ethylhexanoat, tert.-Amyl-peroxi-2-ethylhexylcarbonat, tert.-Butyl-peroxiisobutyrat, 1,1-Di-(tert.-butylperoxi)-cyclohexan, tert.-Butyl-peroxibenzoat, tert.-Butyl-peroxiacetat, tert.-Butyl-peroxidiethylacetat, tert.-Butyl-peroxiisopropylcarbonat, 2,2-Di-(tert.-butylperoxi)-butan, tert.-Amyl-hydroperoxid und/oder 2,5-Dimethyl-2,5-di-(tert.-butylperoxi)-hexan handelt.

17. Verfahren nach einem oder mehreren der Ansprüche 13 bis 16, **dadurch gekennzeichnet, dass** es sich bei dem Lösungsmittel um gradkettige oder verzweigte Alkane, alkylsubstituierte aromatische Lösungsmittel, mit Wasser nicht oder nur teilweise mischbare Alkohole oder Ether, Wasser und/oder Essigsäure handelt.

18. Verfahren nach Anspruch 17, **dadurch gekennzeichnet, dass** es sich bei dem Alkohol um Methanol, Propanol, i-Butanol und/oder n-Butanol oder Mischungen dieser Alkohole mit Wasser handelt.

19. Verfahren nach einem oder mehreren der Ansprüche 13 bis 18, **dadurch gekennzeichnet, dass** die Reaktionstemperatur 50 bis 150 °C beträgt.

20. Verwendung von Mischungen nach mindestens einem der Ansprüche 1 bis 10 als Binder, als Vernetzer bzw. Beschleuniger beim Aushärten von Epoxidharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

21. Verwendung von Mischungen nach mindestens einem der Ansprüche 1 bis 12 als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung und/oder als Synergist.

22. Flammgeschützte thermoplastische oder duroplastische Polymerformmassen, -Formkörper, -Filme, -Fäden und -Fasern, enthaltend 0,5 bis 99,5 Gew.-% Mischungen nach mindestens einem der Ansprüche 1 bis 12, 0,5 bis 99,5 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

23. Flammgeschützte thermoplastische oder duroplastische Polymerformmassen, -Formkörper, -Filme, -Fäden und -Fasern, enthaltend 1 bis 30 Gew.-% Mischungen nach mindestens einem der Ansprüche 1 bis 12, 10 bis 95 Gew.-% thermoplastisches oder duroplastisches Polymer oder Mischungen derselben, 2 bis 30 Gew.-% Additive und 2 bis 30 Gew.-% Füllstoff bzw. Verstärkungsmaterialien, wobei die Summe der Komponenten 100 Gew.-% beträgt.

## Claims

1. A mixture of at least one diphosphinic acid of the formula (I) 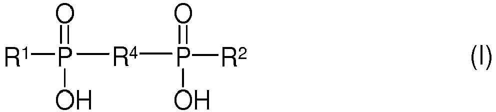 with at least one alkylphosphonic acid of the formula (II) 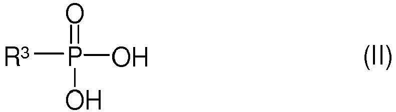 in which
R¹, R² and R³ are the same or different and are each ethyl, n-butyl, isobutyl, tert-butyl, n-hexyl and/or isohexyl, and
R⁴ is ethylene, butylene or hexylene.

2. The mixture as claimed in claim 1, which comprises 0.1 to 99.9% by weight of diphosphinic acid of the formula (I) and 99.9 to 0.1% by weight of alkylphosphonic acid of the formula (II).

3. The mixture as claimed in one or more of claims 1 to 2, which comprises 40 to 99.9% by weight of diphosphinic acid of the formula (I) and 60 to 0.1% by weight of alkylphosphonic acid of the formula (II).

4. The mixture as claimed in one or more of claims 1 to 3, which comprises 60 to 99.9% by weight of diphosphinic acid of the formula (I) and 40 to 0.1% by weight of alkylphosphonic acid of the formula (II).

5. The mixture as claimed in one or more of claims 1 to 4, which comprises 80 to 99.9% by weight of diphosphinic acid of the formula (I) and 20 to 0.1% by weight of alkylphosphonic acid of the formula (II).

6. The mixture as claimed in one or more of claims 1 to 5, which comprises 90 to 99.9% by weight of diphosphinic acid of the formula (I) and 10 to 0.1% by weight of alkylphosphonic acid of the formula (II).

7. The mixture as claimed in one or more of claims 1 to 6, which comprises 95 to 99.9% by weight of diphosphinic acid of the formula (I) and 5 to 0.1% by weight of alkylphosphonic acid of the formula (II).

8. The mixture as claimed in one or more of claims 1 to 7, which comprises 98 to 99.9% by weight of diphosphinic acid of the formula (I) and 2 to 0.1% by weight of alkylphosphonic acid of the formula (II).

9. The mixture as claimed in one or more of claims 1 to 8, wherein the diphosphinic acid is
ethylene-1,2-bis(ethylphosphinic acid),
ethylene-1,2-bis(butylphosphinic acid),
ethylene-1,2-bis(hexylphosphinic acid), butylene-1,2-bis(ethylphosphinic acid), butylene-1,2-bis(butylphosphinic acid),
butylene-1,2-bis(hexylphosphinic acid),
hexylene-1,2-bis(ethylphosphinic acid),
hexylene-1,2-bis(butylphosphinic acid), or hexylene-1,2-bis(hexylphosphinic acid), and the alkylphosphonic acid is ethylphosphonic acid, butylphosphonic acid or hexylphosphonic acid.

10. The mixture as claimed in one or more of claims 1 to 9, which comprises 98 to 99.9% by weight of ethylene-1,2-bis(ethylphosphinic acid) and 2 to 0.1% by weight of ethylphosphonic acid.

11. The mixture as claimed in one or more of claims 1 to 10, which further comprises at least one synergist, the latter being a nitrogen-containing compound such as melem, melam, melon, melamine borate, melamine cyanurate, melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphate, melam polyphosphate, melem polyphosphate and/or melon polyphosphate;
aluminum compounds such as aluminum hydroxide, halloysite, sapphire products, boehmite, nanoboehmite;
magnesium compounds such as magnesium hydroxide;
tin compounds such as tin oxides;
antimony compounds such as antimony oxides;
zinc compounds such as zinc oxide, zinc hydroxide, zinc oxide hydrate, zinc carbonate, zinc stannate, zinc hydroxystannate, zinc silicate, zinc phosphate, zinc borophosphate, zinc borate and/or zinc molybdate;
silicon compounds such as silicates and/or silicones;
phosphorus compounds such as phosphinic acids and salts thereof, phosphonic acids and salts thereof and/or phosphine oxides, phosphazenes and/or piperazine (pyro)phosphates;
carbodiimides, piperazines, (poly)isocyanates, styrene-acrylic polymers; and/or carbinylbiscaprolactam;
nitrogen compounds from the group of oligomeric esters of tris(hydroxyethyl) isocyanurate with aromatic polycarboxylic acids, or benzoguanamine, acetoguanamine, tris(hydroxyethyl) isocyanurate, allantoin, glycoluril, cyanurates, cyanurate-epoxide compounds, urea cyanurate, dicyanamide, guanidine, guanidine phosphate and/or sulfate.

12. The mixture as claimed in one or more of claims 1 to 11, which comprises 99 to 1% by weight of a mixture of at least one diphosphinic acid of the formula (I) and at least one alkylphosphonic acid of the formula (II) as claimed in at least one of claims 1 to 11 and 1 to 99% by weight of synergist.

13. A process for preparing the mixtures as claimed in at least one of claims 1 to 10, which comprises reacting a phosphinic acid source with an alkyne in a solvent in the presence of an initiator.

14. The process as claimed in claim 13, wherein the phosphinic acid source is ethylphosphinic acid and the alkyne is acetylene, 1-butyne, 1-hexyne and/or 2-hexyne.

15. The process as claimed in claim 13 or 14, wherein the initiator is a free-radical initiator having a nitrogen-nitrogen or an oxygen-oxygen bond.

16. The process as claimed in claim 15, wherein the free-radical initiator is 2,2'-azobis(2-amidinopropane) dihydrochloride, 2,2'-azobis(N,N'-dimethyleneisobutyramidine) dihydrochloride, azobis(isobutyronitrile), 4,4'-azobis(4-cyanopentanoic acid) and/or 2,2'-azobis(2-methylbutyronitrile) or hydrogen peroxide, ammonium peroxodisulfate, potassium peroxodisulfate, dibenzoyl peroxide, di-tert-butyl peroxide, peracetic acid, diisobutyryl peroxide, cumene peroxyneodecanoate, tert-butyl peroxyneodecanoate, tert-butyl peroxypivalate, tert-amyl peroxypivalate, dipropyl peroxydicarbonate, dibutyl peroxydicarbonate, dimyristyl peroxydicarbonate, dilauroyl peroxide, 1,1,3,3-tetramethylbutyl peroxy-2-ethylhexanoate, tert-amyl peroxy-2-ethylhexylcarbonate, tert-butyl peroxyisobutyrate, 1,1-di(tert-butylperoxy)cyclohexane, tert-butyl peroxybenzoate, tert-butyl peroxyacetate, tert-butyl peroxydiethylacetate, tert-butyl peroxyisopropylcarbonate, 2,2-di(tert-butylperoxy)butane, tert-amyl hydroperoxide and/or 2,5-dimethyl-2,5-di(tert-butylperoxy)hexane.

17. The process as claimed in one or more of claims 13 to 16, wherein the solvent comprises straight-chain or branched alkanes, alkyl-substituted aromatic solvents, water-immiscible or only partly water-miscible alcohols or ethers, water and/or acetic acid.

18. The process as claimed in claim 17, wherein the alcohol is methanol, propanol, i-butanol and/or n-butanol or comprises mixtures of these alcohols with water.

19. The process as claimed in one or more of claims 13 to 18, wherein the reaction temperature is 50 to 150°C.

20. The use of mixtures as claimed in at least one of claims 1 to 10 as a binder, as a crosslinker or accelerator in the curing of epoxy resins, polyurethanes and unsaturated polyester resins, as polymer stabilizers, as crop protection compositions, as sequestrants, as a mineral oil additive, as an anticorrosive, in washing and cleaning composition applications and in electronics applications.

21. The use of mixtures as claimed in at least one of claims 1 to 12 as a flame retardant, especially as a flame retardant for clearcoats and intumescent coatings, as a flame retardant for wood and other cellulosic products, as a reactive and/or nonreactive flame retardant for polymers, for production of flame-retardant polymer molding compositions, for production of flame-retardant polymer moldings and/or for rendering polyester and pure and blended cellulose fabrics flame-retardant by impregnation, and/or as a synergist.

22. A flame-retardant thermoplastic or thermoset polymer molding composition, molding, film, filament or fiber comprising 0.5 to 99.5% by weight of mixtures as claimed in at least one of claims 1 to 12 0.5 to 99.5% by weight of thermoplastic or thermoset polymer or mixtures thereof, 0 to 55% by weight of additives and 0 to 55% by weight of filler or reinforcing materials, where the sum of the components is 100% by weight.

23. A flame-retardant thermoplastic or thermoset polymer molding composition, molding, film, filament or fiber comprising 1 to 30% by weight of mixtures as claimed in at least one of claims 1 to 12, 10 to 95% by weight of thermoplastic or thermoset polymer or mixtures thereof, 2 to 30% by weight of additives and 2 to 30% by weight of filler or reinforcing materials, where the sum of the components is 100% by weight.

## Revendications

1. Mélanges d'au moins un acide diphosphinique de formule (I) 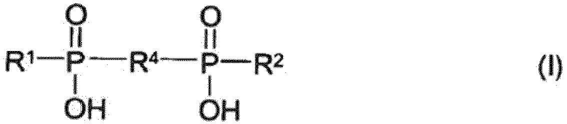 avec au moins un acide alkylphosphonique de formule (II) 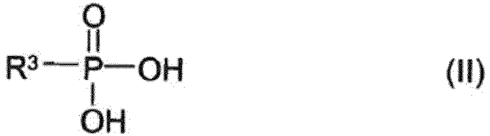 dans lesquelles
R¹, R² et R³ sont identiques ou différents, et signifient éthyle, n-butyle, iso-butyle, tert.-butyle, n-hexyle et/ou iso-hexyle, et
R⁴ signifie éthylène, butylène ou hexylène.

2. Mélanges selon la revendication 1, **caractérisés en ce qu'**ils contiennent 0,1 à 99,9 % en poids d'acide diphosphinique de formule (I) et 99,9 à 0,1 % en poids d'acide alkylphosphonique de formule (II).

3. Mélanges selon une ou plusieurs des revendications 1 à 2, **caractérisés en ce qu'**ils contiennent 40 à 99,9 % en poids d'acide diphosphinique de formule (I) et 60 à 0,1 % en poids d'acide alkylphosphonique de formule (II).

4. Mélanges selon une ou plusieurs des revendications 1 à 3, **caractérisés en ce qu'**ils contiennent 60 à 99,9 % en poids d'acide diphosphinique de formule (I) et 40 à 0,1 % en poids d'acide alkylphosphonique de formule (II) .

5. Mélanges selon une ou plusieurs des revendications 1 à 4, **caractérisés en ce qu'**ils contiennent 80 à 99,9 % en poids d'acide diphosphinique de formule (I) et 20 à 0,1 % en poids d'acide alkylphosphonique de formule (II).

6. Mélanges selon une ou plusieurs des revendications 1 à 5, **caractérisés en ce qu'**ils contiennent 90 à 99,9 % en poids d'acide diphosphinique de formule (I) et 10 à 0,1 % en poids d'acide alkylphosphonique de formule (II) .

7. Mélanges selon une ou plusieurs des revendications 1 à 6, **caractérisés en ce qu'**ils contiennent 95 à 99,9 % en poids d'acide diphosphinique de formule (I) et 5 à 0,1 % en poids d'acide alkylphosphonique de formule (II).

8. Mélanges selon une ou plusieurs des revendications 1 à 7, **caractérisés en ce qu'**ils contiennent 98 à 99,9 % en poids d'acide diphosphinique de formule (I) et 2 à 0,1 % en poids d'acide alkylphosphonique de formule (II).

9. Mélanges selon une ou plusieurs des revendications 1 à 8, **caractérisés en ce que** l'acide diphosphinique consiste en l'acide éthylène-1,2-bis(éthylphosphinique), l'acide éthylène-1,2-bis(butylphosphinique), l'acide éthylène-1,2-bis(hexylphosphinique), l'acide butylène-1,2-bis(éthylphosphinique), l'acide butylène-1,2-bis(butylphosphinique), l'acide butylène-1,2-bis(hexylphosphinique), l'acide hexylène-1,2-bis(éthylphosphinique), l'acide hexylène-1,2-bis(butylphosphinique) ou l'acide hexylène-1,2-bis(hexylphosphinique), et l'acide alkylphosphonique consiste en l'acide éthylphosphonique, l'acide butylphosphonique ou l'acide hexylphosphonique.

10. Mélanges selon une ou plusieurs des revendications 1 à 9, **caractérisés en ce qu'**ils contiennent 98 à 99,9 % en poids d'acide éthylène-1,2-bis(éthylphosphinique) et 2 à 0,1 % en poids d'acide éthylphosphonique.

11. Mélanges selon une ou plusieurs des revendications 1 à 10, **caractérisés en ce qu'**ils contiennent en outre au moins un synergiste, celui-ci consistant en un composé contenant de l'azote tel que le mélem, le mélam, le mélon, le borate de mélamine, le cyanurate de mélamine, le phosphate de mélamine, le phosphate de dimélamine, le triphosphate de pentamélamine, le diphosphate de trimélamine, le triphosphate de tétrakismélamine, le pentaphosphate d'hexakismélamine, le diphosphate de mélamine, le tétraphosphate de mélamine, le pyrophosphate de mélamine, le polyphosphate de mélamine, le polyphosphate de mélam, le polyphosphate de mélem et/ou le polyphosphate de mélon ;
en des composés d'aluminium tels que l'hydroxyde d'aluminium, l'halloysite, les produits de saphir, la boehmite, la nano-boehmite ;
en des composés de magnésium tels que l'hydroxyde de magnésium ;
en des composés d'étain tels que les oxydes d'étain ;
en des composés d'antimoine tels que les oxydes d'antimoine ;
en des composés de zinc tels que l'oxyde de zinc, l'hydroxyde de zinc, l'oxyhydrate de zinc, le carbonate de zinc, le stannate de zinc, l'hydroxystannate de zinc, le silicate de zinc, le phosphate de zinc, le borophosphate de zinc, le borate de zinc et/ou le molybdate de zinc ;
en des composés de silicium tels que les silicates et/ou les silicones ;
en des composés de phosphore tels que les acides phosphiniques et leurs sels, les acides phosphoniques et leurs sels et/ou les oxydes de phosphine, les phosphazènes et/ou les (pyro)phosphates de pipérazine ; en des carbodiimides, des pipérazines, des (poly)isocyanates, des polymères de styrène-acryle ; et/ou du carbinylbiscaprolactame ;
en des composés contenant de l'azote du groupe des esters oligomères de l'isocyanurate de tris(hydroxyéthyle) avec des acides polycarbiniques aromatiques, ou la benzoguanamine, l'acétoguanamine, l'isocyanurate de tris(hydroxyéthyle), l'allantoïne, le glycourile, les cyanurates, les composés d'époxyde de cyanurate, le cyanurate d'urée, le dicyanamide, la guanidine, le phosphate et/ou le sulfate de guanidine.

12. Mélanges selon une ou plusieurs des revendications 1 à 11, **caractérisés en ce qu'**ils contiennent 99 à 1 % en poids d'un mélange d'au moins un acide diphosphinique de formule (I) et d'au moins un acide alkylphosphonique de formule (II) selon au moins l'une quelconque des revendications 1 à 11 et 1 à 99 % en poids de synergiste.

13. Procédé de fabrication de mélanges selon au moins l'une quelconque des revendications 1 à 10, **caractérisé en ce qu'**une source d'acide phosphinique est mise en réaction avec un alcyne dans un solvant en présence d'un initiateur.

14. Procédé selon la revendication 13, **caractérisé en ce que** la source d'acide phosphinique consiste en l'acide éthylphosphinique et l'alcyne consiste en l'acétylène, le 1-butyne, le 1-hexyne et/ou le 2-hexyne.

15. Procédé selon la revendication 13 ou 14, **caractérisé en ce que** l'initiateur consiste en un initiateur radicalaire contenant une liaison azote-azote ou oxygène-oxygène.

16. Procédé selon la revendication 15, **caractérisé en ce que** l'initiateur radicalaire consiste en le dichlorhydrate de 2,2'-azobis(2-amidinopropane), le dichlorhydrate de 2,2'-azobis(N,N'-diméthylène-isobutyramidine), l'azobis(isobutyronitrile), l'acide 4,4'-azobis(4-cyano-pentanoïque) et/ou le 2,2'-azobis(2-méthylbutyronitrile ou le peroxyde d'hydrogène, le peroxodisulfate d'ammonium, le peroxodisulfate de potassium, le peroxyde de dibenzoyle, le peroxyde de di-tert.-butyle, l'acide peracétique, le peroxyde de diisobutyryle, le peroxy-néodécanoate de cumène, le peroxy-néodécanoate de tert.-butyle, le peroxypivalate de tert.-butyle, le peroxypivalate de tert.-amyle, le peroxydicarbonate de dipropyle, le peroxydicarbonate de dibutyle, le peroxydicarbonate de dimyristyle, le peroxyde de dilauroyle, le peroxy-2-éthylhexanoate de 1,1,3,3-tétraméthylbutyle, le peroxy-2-éthylhexylcarbonate de tert.-amyle, le peroxyisobutyrate de tert.-butyle, le 1,1-di-(tert.-butylperoxy)-cyclohexane, le peroxybenzoate de tert.-butyle, le peroxyacétate de tert.-butyle, le peroxydiéthylacétate de tert.-butyle, le peroxyisopropylcarbonate de tert.-butyle, le 2,2-di-(tert.-butylperoxy)-butane, l'hydroperoxyde de tert.-amyle et/ou le 2,5-diméthyl-2,5-di-(tert.-butylperoxy)-hexane.

17. Procédé selon une ou plusieurs des revendications 13 à 16, **caractérisé en ce que** le solvant consiste en des alcanes linéaires ou ramifiés, des solvants aromatiques à substitution alkyle, des alcools ou des éthers non ou seulement partiellement miscibles avec l'eau, l'eau et/ou l'acide acétique.

18. Procédé selon la revendication 17, **caractérisé en ce que** l'alcool consiste en le méthanol, le propanol, l'i-butanol et/ou le n-butanol ou des mélanges de ces alcools avec de l'eau.

19. Procédé selon une ou plusieurs des revendications 13 à 18, **caractérisé en ce que** la température de réaction est de 50 à 150 °C.

20. Utilisation de mélanges selon au moins l'une quelconque des revendications 1 à 10 en tant que liants, en tant qu'agents de réticulation ou accélérateurs lors du durcissement de résines époxydes, de polyuréthanes et de résines polyester insaturées, en tant que stabilisateurs de polymères, en tant qu'agents phytoprotecteurs, en tant qu'agents séquestrants, en tant qu'additif pour huile minérale, en tant qu'agents anticorrosion, dans des applications de détergents et dans des applications électroniques.

21. Utilisation de mélanges selon au moins l'une quelconque des revendications 1 à 12 en tant qu'agents ignifuges, notamment en tant qu'agents ignifuges pour vernis transparents et revêtements intumescents, en tant qu'agents ignifuges pour le bois et d'autres produits cellulosiques, en tant qu'agents ignifuges réactifs et/ou non réactifs pour polymères, pour la fabrication de matériaux de moulage polymères ignifugés, pour la fabrication de corps moulés polymères ignifugés et/ou pour l'ignifugation de tissus purs et mixtes en polyester et cellulose par imprégnation et/ou en tant que synergiste.

22. Matériaux de moulage, corps moulés, films, fils et fibres polymères thermoplastiques ou duroplastiques ignifugés, contenant 0,5 à 99,5 % en poids de mélanges selon au moins l'une quelconque des revendications 1 à 12, 0,5 à 99,5 % en poids d'un polymère thermoplastique ou duroplastique ou de mélanges de celui-ci, 0 à 55 % en poids d'additifs et 0 à 55 % en poids de charges ou de matériaux renforçants, la somme des composants étant de 100 % en poids.

23. Matériaux de moulage, corps moulés, films, fils et fibres polymères thermoplastiques ou duroplastiques ignifugés, contenant 1 à 30 % en poids de mélanges selon au moins l'une quelconque des revendications 1 à 12, 10 à 95 % en poids d'un polymère thermoplastique ou duroplastique ou de mélanges de celui-ci, 2 à 30 % en poids d'additifs et 2 à 30 % en poids de charges ou de matériaux renforçants, la somme des composants étant de 100 % en poids.
